# EUROPEAN PATENT SPECIFICATION

(11) **EP 3 180 994 B1**
(45) Date of publication and mention of the grant of the patent: **21.11.2018**
(21) Application number: 15778696.3
(22) Date of filing: 11.08.2015
(51) Int. Cl.: A23L 19/00, A23B 7/024, C11B 1/04, C11B 1/06

(54) **OLIVE OIL PRODUCTION METHOD, FREEZE-DRIED OLIVE PASTE OR FREEZE-DRIED OLIVE PRODUCT AND MACHINE FOR PRODUCING OLIVE OIL USING SAID PASTE**
OLIVENÖLHERSTELLUNGSVERFAHREN, GEFRIERGETROCKNETE OLIVENPASTE ODER GEFRIERGETROCKNETES OLIVENPRODUKT UND MASCHINE ZUR HERSTELLUNG VON OLIVENÖL UNTER VERWENDUNG DER BESAGTEN PASTE
PROCÉDÉ D'OBTENTION D'HUILE D'OLIVE, DE PÂTE OU DE PRODUIT LYOPHILISÉ D'OLIVES ET MACHINE D'OBTENTION D'HUILE D'OLIVE AU MOYEN DE CETTE PÂTE

(30) Priority: 11.08.2014 ES 201431218
(43) Date of publication of application: 21.06.2017
(73) Proprietor: Mediterrànea Identitat, S.A., 43850 Cambrils (ES); Costa Escoda, Telm, 43850 Cambrils (ES)
(72) Inventor: COSTA ESCODA, Telm, 43850 Cambrils (ES)
(74) Representative: Ponti & Partners, S.L.P
(86) International application number: PCT/ES2015/070620
(87) International publication number: WO 2016/024034

(56) References cited:
- WO-A1-2013/030426
- WO-A1-2013/093169
- US-A- 3 474 955
- US-A1- 2010 178 412
- US-A1- 2011 179 955

## Description

The present invention relates to a procedure for obtaining olive oil. It also refers to a machine and a paste or lyophilised product made from olives for extracting oil using this procedure.

### BACKGROUND OF THE INVENTION

Olive oil is extracted from the olive (Olea Europea), which is the fruit of the olive tree. The composition of this fruit at the time of collecting is highly variable, depending on the variety of the olive, the nature of the soil, the climate and the cultivation method.

Olive oil is a natural product that can become oxidised or deteriorate both during the process to obtain it as well as during its storage. For this reason, and with the aim of avoiding changes to the product's composition the storage of olive oil takes place at a constant temperature in stores that are impermeable to light and humidity, made of inert materials to avoid the absorption of odours and usually in an atmosphere that has been modified to exclude the presence of oxygen.

However, this type of storage is expensive and, in addition, it does not avoid the risk of the sedimentation of the insoluble material that can then ferment and give the oil an unpleasant odour. In practice, to minimise the risk of these sediments forming, the oil must be filtered before bottling, while ensuring that its exposure to air is as short as possible in order to avoid oxidation or rancidification.

Patent application WO2008/122320 describes a method for preserving the olive oil that consists of freezing the paste obtained immediately after milling the olives and then vacuum packing the frozen paste. This document also describes a method for obtaining olive oil from an olive paste that is comprised of the following stages:
- mixing or kneading an olive paste that has previously been frozen to avoid spoilage,
- extraction of the oil from the olive paste by centrifugation, and
- separation of the aqueous phase from the oleaginous phase by decanting.

The method for preserving and extracting olive oil described in the previously mentioned patent application obtained a high quality olive oil instantaneously from an olive paste that had been frozen from the moment it was collected. It has been found that this paste gives rise to an olive oil with physicochemical and organoleptic characteristics that are superior to the oil obtained using other preservation methods, as well as therefore allowing the production of excellent quality virgin olive oil over long periods of time.

The oil obtained using the process in the aforementioned patent is an extra virgin olive oil, that can be extracted whenever required, after long periods of time, using the paste that has previously been frozen and packed in a vacuum or in a protective atmosphere to avoid its deterioration.

The application for Spanish patent ES2415559 describes a machine that has been specially designed to obtain oil instantaneously from a packaged olive paste. This machine comprises a single housing for receiving a container holding olive paste. This housing is associated with a beating paddle to beat the paste and it is mounted to allow it to spin and centrifuge the paste and separate the liquid phase from the solid. Once centrifuged the oil must be decanted to separate the oil phase from the aqueous phase.

The machine described in the aforementioned patent application ES241559 allows olive oil to be obtained instantaneously. Thanks to this, anyone anywhere in the world can have access to an olive oil that is obtained at the moment of consumption, with optimal physicochemical and organoleptic characteristics.

WO 2013/030426 discloses a process in which olives are subjected to pre-washing and boning, followed by a lyophilization process of the slurry, a centrifugal grinding step, and finally an olive oil extraction step.

However, it has been observed that the instantaneous extraction of oil from an olive paste can be expensive and difficult to perform. In order to avoid deterioration the paste must be kept frozen up to the moment of consumption, which makes product logistics extremely difficult.

In addition, it has been observed that in order to optimise the correct separation of the oil and aqueous phases and maximise the yield of the olive oil obtained it is necessary to submit the paste to a double process of centrifugation and decanting. However, this double process of centrifugation and decanting impedes the implementation of an instantaneous process to obtain oil using a simple household machine.

### DESCRIPTION OF THE INVENTION

A main objective of the present invention is overcome the aforementioned disadvantages by developing a procedure and a machine to extract olive oil that presents the advantages that are described below.

A second objective of the present invention is that of providing a paste or lyophilised olive product for obtaining oil that has been lyophilised in order to reduce its water content, preferably, obtaining a water content in the paste of less than 40 % by weight.

The paste or product is lyophilised to obtain a water content of less than 25 %, for example, equal to or lower than 10 % by weight and, preferably, the paste or product is lyophilised without kneading.

A third objective of the present invention is that of providing a packaged food product for obtaining oil using the claimed procedure, which comprises a container or capsule that contains an initial chamber with paste or lyophilised olive product and at least a second chamber containing water or a solid product to moisten and give flavour to the paste.

This second chamber of the container can be perforated to allow the water to leave the second chamber and moisten or give flavour to the paste contained in the container's first chamber, prior to extracting the oil.

In line with the first objective, according to a first aspect the present invention provides a process for obtaining olive oil as recited in claim 1.

The claimed process includes a step of lyophilisation of the paste or split olives that is performed before the oil is extracted. This lyophilisation step reduces the olive paste's water content without completely deactivating the paste's enzymatic activity, which is responsible for the release of the phenols and polyphenols that have positive health effects. In addition, this reduction in water content facilitates the preservation of the paste's qualities while facilitating the logistics of the packaged product.

It has also been observed that the lyophilisation simplifies and speeds up the subsequent step of instantaneous oil extraction as the reduction in water simplifies the separation of the oil. Before the oil extraction step, the paste or lyophilisate is moistened or partially rehydrated until the paste or lyophilised product has a water content higher that the lyophilised product.

The claimed procedure has the advantage that it allows the user to "reconstruct" the olive paste by adding a predetermined quantity of water or equivalent compound to facilitate the subsequent oil extraction step. In addition, the flavour of the oil obtained can depend on the quantity of water added to the paste.

Additionally, the paste or lyophilised product is moistened by adding water or water vapour to obtain a paste with a water content higher than that of the lyophilised product. Alternatively, the paste is moistened by adding a product or compound that is different from water. This product or compound that is different from water could be, for example, an essence and/or fruit juice or equivalent products that, as well as supplying water also provide an additional aroma or taste to the oil at the same time as moistening the paste.

The oil extraction process comprises the step of mixing or beating the paste or lyophilised product while it is being moistened or rehydrated with the addition of a predetermined quantity of water or water vapour.

As previously stated, the user can add a predetermined quantity of water to the paste that is sufficient to achieve an emulsion or batter without harming or slowing down the subsequent liquid separation phase of the extraction process.

The oil extraction phase comprises the step of pressing and/or centrifuging the paste or lyophilised product to obtain the oil.

According to a preferred embodiment the step to cold press the paste or lyophilised product is performed using the action of an elastic membrane acting on the lyophilised paste. This elastic membrane is freely mounted in the lid of a receptacle where the paste is stored and in such a way that the membrane can be moved by the action of the pressure of water injected into a cavity in this lid.

Preferably the of milling or splitting the olives is carried out on whole, frozen olives with or without stones, maintaining a freezing temperature of equal to or less than -18ºC and preferably these olives have been frozen and packaged in an oxygen-free atmosphere after picking.

In relation to the lyophilisation process itself, it should preferably be undertaken on a layer of olive paste with a thickness of less than 15 cm, preferably less than 2 cm. The parameters of the lyophilisation process (time and temperature, among others) will be sufficient to ensure a reduction in the paste's water content which comprises between 10 % and 55 % by weight and to guarantee the quality of the oil contained in the paste.

This paste or lyophilised product has been found to possess a loose texture with an agreeable odour. Preferably the water content of the paste or lyophilised product comprises between 1 % and 10 % by weight. The paste or lyophilised product can be packaged in a container with an atmosphere modified to have an oxygen content lower than ambient levels, preferably by vacuum packing.

The instantaneous extraction of the oil from the paste or lyophilised product can be performed using a simple machine.

In accordance with a second aspect, the present invention refers to a machine for extracting olive oil through the claimed procedure comprising a cavity for receiving the lyophilised product made from olives and for receiving a container or receptacle containing the lyophilised product and characterised by comprising; a mixing or beating unit comprising a paddle to beat or emulsify the lyophilised
product and means for providing water within the container or, said means including a pump for pumping the water and a vaporising device connected to a holding ring within the cavity or bowl that receives the lyophilised product, and a unit for pressing or centrifuging the beaten or emulsified lyophilised product.

In the present invention, the oil extraction can be performed with a simple machine comprising just a mixing or beating unit and a pressing or centrifuging unit. The cavity containing the paste or lyophilised olive product can be a bowl that can be slotted into these units using a connector or ring with bayonet-type fixings. The mixing or beating unit is associated with a water pump and a vaporising device that injects water vapour (or that of an equivalent liquid) into the cavity or bowl containing the lyophilised paste. Thanks to this the mixing or beating can be performed while providing a predetermined quantity of water depending of the type of lyophilised paste contained within the cavity or bowl, or depending of the type of oil required (the intensity of flavour).

According to a preferred embodiment the claimed machine comprises a pressing unit that includes an elastic membrane that applies pressure to the lyophilised paste. Preferably this elastic membrane is moveably mounted between a lid and a clamping ring of said bowl. The machine comprises a pump for injecting water into a cavity in the lid in order to bring about the displacement of the elastic membrane and thereby apply pressure to the lyophilised paste housed within the bowl.

Preferably the machine's bowl comprises a perforated sleeve or inner base that allows the egress of the oil extracted by pressing or centrifugation of the paste within the sleeve.

In the present invention the process of extracting the oil is performed by malaxation or the process of kneading an olive paste as the olive paste is warmed (to a temperature of less than 45ºC) in order to reduce the oil's viscosity and allow the formation of a homogenous oil phase that facilitates the subsequent separation of the oil. In conventional processes the malaxation is undertaken for approximately 30 to 45 minutes.

The milling of the whole olives, with or without stones, is performed using conventional milling systems to break the oil-filled pulp vacuoles. The moisture content of the olive paste after milling can vary depending of the year's climactic conditions between 40 % and 60 % by weight. The splitting or fractioning is performed so as to obtain slices of the olives.

In the present invention, the paste or lyophilised olive product is understood to be a paste or product that is lyophilised until a product with stable particulates is achieved with a reduced water content.

### BRIEF DESCRIPTION OF THE DRAWINGS

Some drawings are included in order to provide a greater understanding of the description in which, schematically and solely by way of non-limiting example, is represented a practical case of the embodiment of the present invention, namely a machine for extracting olive oil.

In these drawings,
Figures 1 and 2 are schematic representations of an elevation and plan view of the machine of the present invention.
Figure 3 is a schematic view representing an exploded view of a bowl and some components of the press unit.
Figure 4 is a schematic view representing an exploded view of a bowl and some components of the machine's mixing and beating unit.
Figure 5 shows a schematic view representing an exploded view of the components of the mixing and beating unit and pressing units in a second embodiment of the machine.
Figure 6 shows a schematic perspective view of the units shown in Figure 5 mounted in each of the bowls.

### DESCRIPTION OF A PREFERED EMBODIMENT

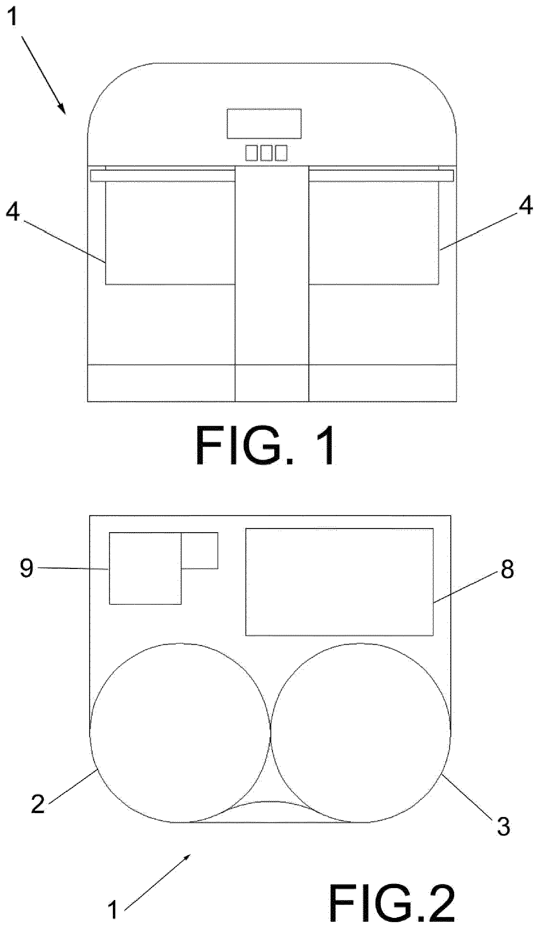

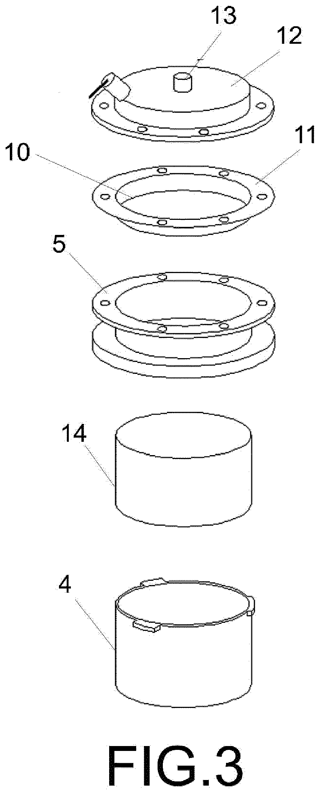

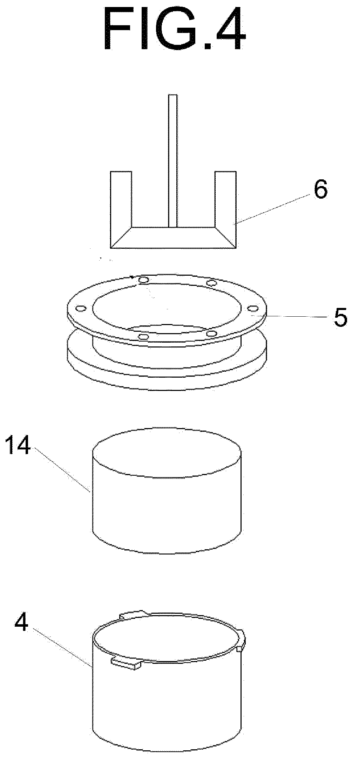

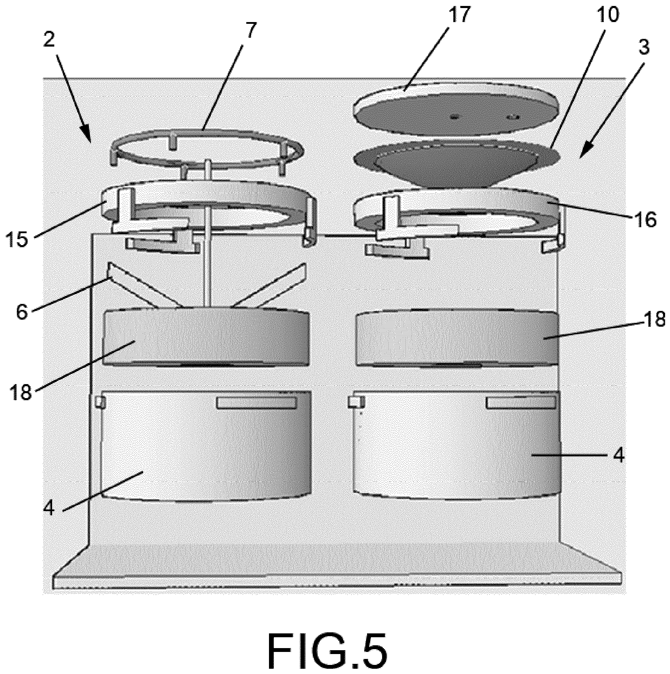

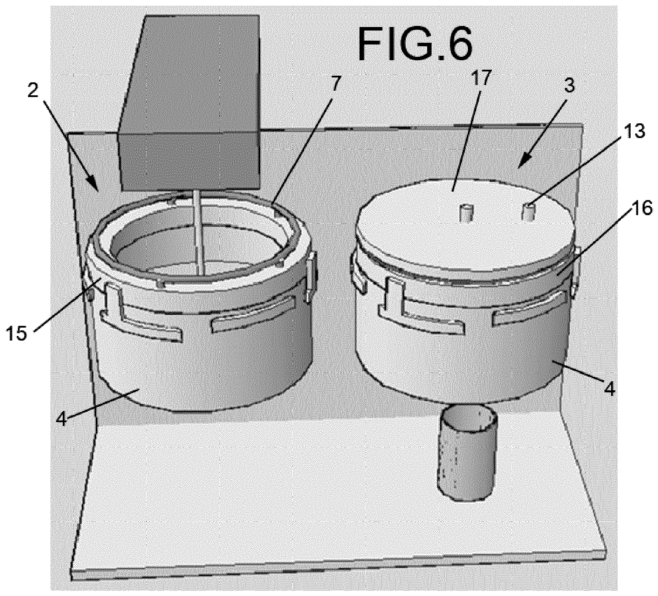

The following describes a preferred embodiment of the oil extraction machine of the present invention making reference to Figures 1 to 6.

The claimed machine 1 comprises an olive paste mixing and beating unit 2, a paste pressing unit 3, a bowl 4 to hold the lyophilised olive paste and a connector 5 to rapidly connect the bowl 4 to each of the units 2 and 3.

The mixing and beating unit 2 incorporates a beating paddle 6 and a vaporiser or sprinkler device 7 for injecting water or water vapour with the help of a dosing pump 8 that is connected to a water reservoir 9 within the machine 1. This means that the mixing or beating can be carried out while the lyophilised paste is being moistened or rehydrated.

The pressing unit 3 incorporates an elastic membrane 10 that is mounted so that it can move between a ring 11 or 16 and a lid 12 or 17 within the bowl 4. This elastic membrane 10 is moved by the hydraulic force of water injected into the cavity delineated by the lid 12 or 17 and the membrane 10. The injected water comes from a second reservoir within the machine 1.

As is visible in the figures, the lid 12 or 17 includes a valve 13 for purging the accumulated air from within the cavity delineated by the elastic membrane 10 and the lid 12 or 17. As regards the bowl 4, it comprised a sleeve 14 or internal base that is perforated in order to allow the egress of the oil extracted by cold pressing of the lyophilised paste housed inside. In addition, the bowl 4 comprises a distributor cone 18 that the paddle 6 or the membrane 10 acts on to bring about the homogenisation of the paste in the mixing and beating unit 2 and the separation of the oil in the pressing unit 3.

The following describes a functioning example of the machine 1 making reference to the claimed oil extraction process.

In the example described the oil extraction is performed using an olive paste that has previously been lyophilised and vacuum packed. It is an olive paste that has not been kneaded (it has not been treated by malaxation) and it is an olive paste that was obtained by milling whole olives using conventional methods.

The olive paste used has been lyophilised by forming layers of paste 2 cm thick to give a product with a residual water content of less than 10 % by weight. The duration of the lyophilisation cycle is less than 60 hours. Once lyophilised the paste is vacuum packed.

In order to preserve the oil's natural quality the paste is obtained from olives that have been frozen at origin, with or without stones, using cryogenic methods or mechanical chilling, and that have been packed in a modified atmosphere (preferably using nitrogen flushing) to reduce the presence of oxygen. These olives have been maintained frozen and packaged at temperatures equal to or less than -18ºC until the moment they are lyophilised. Immediately before being lyophilised the olives are milled thereby avoiding as far as is possible prolonged contact with atmospheric oxygen and maintaining the low temperatures. Once lyophilised the olives are packaged in high barrier packaging and in an atmosphere modified with inert gases or with a partial vacuum to minimise the residual oxygen within the packaging.

When the user of the machine 1 wants to extract the oil instantaneously, they open a pack of lyophilised olive paste that preserves all the smell and aroma of the recently picked olives and tips the pack's contents into the bowl 4.

The user then places the bowl 4 into the mixing and beating unit 2 using the connector 5 or clamping ring 15 that allows a rapid bayonet-type connection. The beating paddle 6 is inserted into the bowl 4 over the distribution cone 18 ready to be moved by the motor.

The beating of the paste is performed while simultaneously injecting water or water vapour into the cavity of the bowl 4 in order to moisten the paste. The quantity of water injected is predetermined depending of the type of lyophilised paste contained within the cavity or bowl 4, or depending of the type of oil required (the intensity of flavour). Additionally, as mentioned in the description of the invention, instead of water or in addition to water it is also possible to use a juice or essence to moisten the paste.

It is also possible to add a solid food product to the lyophilised paste to provide the oil with a different flavour (for example, an aroma or a spice). This product should be added before the beating or pressing.

Once the beating is finished the user removes the bowl 4 from the beating and mixing unit 2 and connects it directly to the connector 5 or clamping ring 16 of the pressing unit 3.

To carry out the pressing the user must turn on the machine's pump in order to inject the water into the cavity defined by the elastic membrane 10 of the bowl 4 that is mounted in the ring 11 or 16 of the lid 12 or 17. The force of the compression that the elastic membrane 10 applies to the paste within the cavity of the bowl 4 separates the oil from the water and the oil instantaneously forms through the holes (not shown) in the sleeve 14 or interior base.

As mentioned in the description of the invention, it has been stated that the lyophilisation of the paste simplifies the oil extraction process, as it allows a high quality oil to be obtained without needing to perform a double step of centrifuging, which ensures the complete separation of the aqueous phase. This means that it is possible to achieve an instantaneous oil extraction process that is simple and rapid and obtain an oil with high organoleptic quality.

Despite having described and represented a specific embodiment of the present invention it is obvious that a person skilled in the art could introduce variations and modifications or substitute the details for others that are technically equivalent, without departing from the scope of protection defined by the attached claims. For example, although reference has been made herein to an embodiment of the machine 1 that only uses the press to obtain the oil the same machine 1 could also be designed to perform a simple centrifugation of the lyophilised paste. In addition, although one moisturising step has been described for the paste involving the injection of water or vapour using a pump, this step could also be performed, for example, by perforating an additional chamber of the packaging or capsule to allow the water in this chamber to come into contact with the paste contained in its packaging. This additional chamber in the packaging or capsule could also include a food product that would give flavour to the oil.

## Claims

1. Procedure for obtaining olive oil comprising the steps of
a. Mechanically milling the whole olives, with or without stones, to obtain an olive paste, or alternatively, splitting the olives, with or without stones,
b. Lyophilising the paste or split olives from step a) in order to reduce their water content,
c. Moistening or partially rehydrating the lyophilized product of step b) until the product has a water content higher than the lyophilised product.
d. Extracting the oil from the lyophilised product from step c), said oil extraction phase comprising the steps of:
d1) mixing or beating the moistened or partially rehydrated lyophilised product of step c) and
d2) pressing and/or centrifuging the product of step d1)

2. Procedure according to claim 1, in which said lyophilisate is moistened or partially rehydrated by adding water or water vapour.

3. Procedure according to claim 1, in which said lyophilisate is moistened by adding a compound other than water.

4. Procedure according to claim 1, wherein the lyophilisation step is undertaken to ensure a reduction in the paste water content comprised between 10% and 55% by weight.

5. Procedure according to any of the previous claims, comprising the step of mixing or beating the lyophilisate while it is moistened or partially rehydrated.

6. Procedure according to claim 1, in which the olives in step a) are whole frozen olives, with or without stones, and where the milling or splitting of these olives is performed while the temperature is maintained at equal to or below -18ºC.

7. Procedure according to claim 1, in which the step after step b) involves the packaging of the paste or lyophilised product in a container with a modified atmosphere with an oxygen content lower than atmospheric concentrations.

8. Procedure according to claim 1, in which the lyophilisation of step b) is performed on a layer of olive paste less than 15 cm thick.

9. Machine (1) for extracting olive oil through the claimed procedure according to claims 1 to 8, comprising a cavity (4) for receiving the lyophilisate made from olives and for receiving a container or receptacle containing the lyophilisate and **characterised by** comprising;
- a mixing or beating unit (2) comprising a paddle (6) to beat and/or emulsify the ef lyophilised product and means for providing water within the container or cavity where the product is held (7,8,9), said means including a pump (8) for pumping the water and a vaporising device (7) connected to a holding ring (15) within the cavity or bowl (4) that receives the lyophilised product, and
- a unit (3) for pressing and/or centrifuging the beaten or emulsified lyophilised product.

10. Machine (1) according to claim 9, comprising a bowl (4) for receiving the lyophilisate, where the bowl (4) comprises a perforated sleeve or interior base (14) for allowing the oil extracted by pressing or centrifuging of the paste to leave the inside of the sleeve (14).

11. Machine (1) according to claim 10, in which the bowl (4) that receives the paste or lyophilised product comprises a distribution cone (18) to facilitate the mixing of the paste or product and the extraction of the oil during the pressing.

12. Packaged food product that comprises;
- a receptacle or capsule containing an initial chamber with or lyophilised product obtained from step b) of claim 1,
- and at least a second chamber containing water or a solid product suitable for moistening or giving flavour to the lyophilised product before performing the oil extraction of step d) of the procedure according to any of claims 1 to 8.

13. Packaged food product according to claim 12, in which the interior atmosphere of said recipient or capsule is modified to avoid the deterioration of the olive paste.

## Patentansprüche

1. Verfahren zum Erhalten von Olivenöl, das folgende Schritte aufweist:
a. mechanisches Mahlen der ganzen Oliven, mit oder ohne Kerne, um eine Olivenpaste zu erhalten, oder alternativ dazu, Zerteilen der Oliven, mit oder ohne Kerne,
b. Lyophilisieren der Paste oder zerteilten Oliven aus Schritt a), um deren Wassergehalt zu reduzieren,
c. Anfeuchten oder teilweises Rehydrieren des lyophilisierten Produkts aus Schritt b), bis das Produkt einen höheren Wassergehalt als das lyophilisierte Produkt aufweist,
d. Extrahieren des Öls aus dem lyophilisierten Produkt aus Schritt c), wobei die Ölextrahierungsphase die folgenden Schritte aufweist:
d1) Mischen oder Schlagen des angefeuchteten oder teilweise rehydrierten lyophilisierten Produkts aus Schritt c) und
d2) Pressen und/oder Zentrifugieren des Produkts aus Schritt d1).

2. Verfahren gemäß Anspruch 1, bei dem das Lyophilisat durch Hinzufügen von Wasser oder Wasserdampf angefeuchtet oder teilweise rehydriert wird.

3. Verfahren gemäß Anspruch 1, bei dem das Lyophilisat durch Hinzufügen einer Verbindung außer Wasser angefeuchtet wird.

4. Verfahren gemäß Anspruch 1, bei dem der Lyophilisierungsschritt ausgeführt wird, um sicherzustellen, dass eine Reduzierung des Pastenwassergehalts zwischen 10 Gew.-% und 55 Gew.-% liegt.

5. Verfahren gemäß einem der vorherigen Ansprüche, das den Schritt des Mischens oder Schlagens des Lyophilisats umfasst, während dasselbe angefeuchtet oder teilweise rehydriert ist.

6. Verfahren gemäß Anspruch 1, bei dem die Oliven in Schritt a) ganze gefrorene Oliven sind, mit oder ohne Kerne, und wobei das Mahlen oder Zerteilen dieser Oliven durchgeführt wird, während die Temperatur bei -18° C oder darunter gehalten wird.

7. Verfahren gemäß Anspruch 1, bei dem der Schritt nach Schritt b) das Verpacken der Paste oder des lyophilisierten Produkts in einen Behälter mit einer modifizierten Atmosphäre mit einem Sauerstoffgehalt beinhaltet, der geringer ist als atmosphärische Konzentrationen.

8. Verfahren gemäß Anspruch 1, bei dem das Lyophilisieren aus Schritt b) an einer Schicht aus Olivenpaste durchgeführt wird, die weniger als 15 cm dick ist.

9. Maschine (1) zum Extrahieren von Olivenöl durch das beanspruchte Verfahren gemäß den Ansprüchen 1 bis 8, die einen Hohlraum (4) zum Aufnehmen des aus Oliven hergestellten Lyophilisats und zum Empfangen eines Behälters oder einer Aufnahmevorrichtung, der/die das Lyophilisat enthält und **dadurch gekennzeichnet** ist, das derselbe/dieselbe folgende Merkmale aufweist:
- eine Misch- oder Schlageinheit (2), die ein Paddel (6), um das lyophilisierte Produkt zu schlagen und/oder zu emulgieren, und eine Einrichtung zum Bereitstellen von Wasser in dem Behälter oder Hohlraum, in dem das Produkt gehalten wird (7, 8, 9), aufweist, wobei die Einrichtung eine Pumpe (8) Pumpen des Wassers und eine Verdampfungsvorrichtung (7) umfasst, die mit einem Haltering (15) in dem Hohlraum oder der Schüssel (4) verbunden ist, der/die das lyophilisierte Produkt aufnimmt, und
- eine Einheit (3) zum Pressen oder Zentrifugieren des geschlagenen oder emulgierten lyophilisierten Produkts.

10. Maschine (1) gemäß Anspruch 9, die eine Schüssel (4) zum Aufnehmen des Lyophilisats aufweist, wobei die Schüssel (4) eine perforierte Hülse oder Innenbasis (14) aufweist, um zu ermöglichen, dass das durch Pressen oder Zentrifugieren der Paste extrahierte Öl das Innere der Hülse (14) verlässt.

11. Maschine (1) gemäß Anspruch 10, bei der die Schüssel (4), die die Paste oder das lyophilisierte Produkt aufnimmt, einen Verteilungskegel (18) aufweist, um das Mischen der Paste oder des Produkts und die Extrahierung des Öls während des Pressens zu erleichtern.

12. Verpacktes Lebensmittelprodukt, das folgende Merkmale aufweist:
- eine Aufnahmevorrichtung oder eine Kapsel, die eine Anfangskammer mit einem aus Schritt b) aus Anspruch 1 erhaltenen lyophilisierten Produkt enthält,
- und zumindest eine zweite Kammer, die Wasser oder ein festes Produkt enthält, das dazu geeignet ist, das lyophilisierte Produkt anzufeuchten oder demselben Geschmack zu verleihen, bevor die Ölextrahierung aus Schritt d) des Verfahrens gemäß einem der Ansprüche 1 bis 8 ausgeführt wird.

13. Verpacktes Lebensmittelprodukt gemäß Anspruch 12, bei dem die innere Atmosphäre der Aufnahmevorrichtung oder der Kapsel dahin gehend modifiziert ist, einen Verfall der Olivenpaste zu vermeiden.

## Revendications

1. Procédure d'obtention d'huile d'olive comprenant les étapes de
a. broyage mécanique des olives entières, avec ou sans noyaux, pour obtenir une pâte d'olive, ou en variante, division des olives, avec ou sans noyaux,
b. lyophilisation de la pâte ou des olives divisées de l'étape a) afin de diminuer leur teneur en eau,
c. humidification ou réhydratation partielle du produit lyophilisé de l'étape b) jusqu'à ce que le produit ait une teneur en eau supérieure au produit lyophilisé,
d. extraction de l'huile à partir de la pâte de produit lyophilisé de l'étape c), ladite phase d'extraction d'huile comprenant les étapes de :
d1) mélange ou battage du produit lyophilisé humidifié ou partiellement réhydraté de l'étape c) et
d2) pressage et/ou centrifugation du produit de l'étape d1).

2. Procédure selon la revendication 1, dans laquelle ledit lyophilisat est humidifié ou partiellement réhydraté par ajout d'eau ou de vapeur d'eau.

3. Procédure selon la revendication 1, dans laquelle ledit lyophilisat est humidifié par ajout d'un composé autre que l'eau.

4. Procédure selon la revendication 1, dans laquelle l'étape de lyophilisation est conduite pour assurer une réduction de la teneur en eau de la pâte comprise entre 10 % et 55 % en poids.

5. Procédure selon l'une quelconque des revendications précédentes, comprenant l'étape de mélange ou battage du lyophilisat tandis qu'il est humidifié ou partiellement réhydraté.

6. Procédure selon la revendication 1, dans laquelle les olives dans l'étape a) sont des olives congelées entières, avec ou sans noyaux, et dans laquelle le broyage ou la division de ces olives est effectuée tandis que la température est maintenue égale ou inférieure à -18 °C.

7. Procédure selon la revendication 1, dans laquelle l'étape après l'étape b) met en oeuvre le conditionnement de la pâte ou du produit lyophilisé dans un récipient avec une atmosphère modifiée ayant une teneur en oxygène inférieure aux concentrations atmosphériques.

8. Procédure selon la revendication 1, dans laquelle la lyophilisation de l'étape b) est effectuée sur une couche de pâte d'olives de moins de 15 cm d'épaisseur.

9. Machine (1) pour extraire de l'huile d'olive par la procédure revendiquée selon les revendications 1 à 8 comprenant une cavité (4) pour recevoir le lyophilisat fabriqué à partir d'olives et pour recevoir un récipient ou un réceptacle contenant le lyophilisat et **caractérisée en ce qu'**elle comprend ;
- une unité de mélange ou de battage (2) comprenant une pale (6) pour battre et/ou émulsifier le produit lyophilisé et un moyen pour fournir de l'eau dans le récipient ou la cavité où le produit est contenu (7, 8, 9), ledit moyen comprenant une pompe (8) pour pomper l'eau et un dispositif de vaporisation (7) raccordé à une bague de retenue (15) dans la cavité ou le bol (4) qui reçoit le produit lyophilisé, et
- une unité (3) pour presser et/ou centrifuger le produit lyophilisé, battu ou émulsifié.

10. Machine (1) selon la revendication 9, comprenant un bol (4) pour recevoir le lyophilisat, le bol (4) comprenant un manchon ou une base intérieure perforé (14) pour permettre à l'huile extraite par pressage ou centrifugation de la pâte de quitter l'intérieur du manchon (14).

11. Machine (1) selon la revendication 10, dans laquelle le bol (4) qui reçoit la pâte ou le produit lyophilisé comprend un cône de distribution (18) pour faciliter le mélange de la pâte ou du produit et l'extraction de l'huile pendant le pressage.

12. Produit alimentaire conditionné qui comprend ;
- un réceptacle ou une capsule contenant une chambre initiale avec un produit lyophilisé obtenu dans l'étape b) selon la revendication 1
- et au moins une deuxième chambre contenant de l'eau ou un produit solide adapté pour humidifier ou donner de la saveur au produit lyophilisé avant d'effectuer l'extraction d'huile de l'étape d) de la procédure selon l'une quelconque des revendications 1 à 8.

13. Produit alimentaire conditionné selon la revendication 12, dans lequel l'atmosphère intérieure dudit récipient ou de ladite capsule est modifiée afin d'éviter la dégradation de la pâte d'olives.
